# EUROPEAN PATENT APPLICATION

(11) **EP 3 671 426 A1**
(43) Date of publication of application: **24.06.2020**
(21) Application number: 19191204.7
(22) Date of filing: 12.08.2019
(51) Int. Cl.: G06F 3/12

(54) **IMAGE FORMING APPARATUS AND DATA STRUCTURE**

(30) Priority: 21.12.2018 JP 2018239624
(71) Applicant: Toshiba Tec Kabushiki Kaisha, 141-8562 Tokyo (JP)
(72) Inventor: KATO, Hiroyuki, Shinagawa-ku, Tokyo 141-8562 (JP)
(74) Representative: Bandpay & Greuter

(57) **Abstract**

An image forming apparatus as disclosed includes an installation section. The installation section is configured to install an application and install a number of different start parameters for the application. The image forming apparatus also includes an association section that is configured to associate one start parameter selected from the number of start parameters and the application with an object. The image forming apparatus further includes an execution section that is configured to execute the application associated with the object using the start parameter associated with the object in response to an operation input on the object.

## Description

### FIELD

Embodiments described herein relate generally to an image forming apparatus and a data structure.

### BACKGROUND

An image forming apparatus often includes a built-in application (hereinafter referred to as an "application").

### SUMMARY OF INVENTION

To solve such problem, there is provided an image forming apparatus, comprising:
an interface configured to receive an operation input on an object of the interface; and
a processing section configured to:
   install an application;
   install a plurality of parameter sets each including one or more start parameters for the application;
   associate one parameter set selected from the plurality of parameter sets and the application with the object; and
   execute the application associated with the object using the start parameter included in the parameter set associated with the object, in response to the operation input on the object, wherein the plurality of parameter sets includes different start parameters.

Preferably, the processing section does not associate a parameter set including a start parameter not supported by the image forming apparatus with the object.

Preferably still, the processing section rewrites a start parameter not supported by the image forming apparatus with another predetermined start parameter when the start parameter not supported by the image forming apparatus is included in a parameter set.

Preferably yet, the processing section determines that there is an object associated with a parameter set and an application which are the same as the parameter set and the application to be associated with an object.

Suitably, the object includes an icon button displayed on the interface.

Suitably still, the different start parameters include parameters related to color, size, modes of operations, and action instructions.

Suitably yet, the processing section is further configured to import an export file and install a second target application.

The invention also relates to a computer-implemented data structure used in an image forming apparatus, the data structure comprising:
data for installing an application in the image forming apparatus; and
a plurality of parameter sets each including one or more start parameters for the application configured to be executed in the image forming apparatus, wherein:
   the plurality of parameter sets includes different start parameters, respectively, and
   the data structure is operable to install the application and the plurality of parameter sets in the image forming apparatus in such a manner that the application is executable using a start parameter included in one parameter set selected from the plurality of parameter sets.

Preferably, the data for installing an application in the image forming apparatus comprises two or more different applications to be installed in the image forming apparatus.

Preferably still, the two or more different applications include the plurality of parameter sets and have different start parameters therein.

Preferably yet, the different start parameters include parameters associated with color, duplex or simplex mode, specific size, document mode, or test copy.

Suitably, the application installed from the data in the image forming device is replaceable with another application in the data by operations of uninstallation and installation.

Suitably still, the data for installing an application in the image forming apparatus is modifiable by adding or importing a new application, exporting a newly configured application, or removing an existing application.

The invention also concerns a A method for applying a set of start parameters in an image forming device, the method comprising:
providing two or more objects on an interface, the two or more objects associated with respective applications having respective set of parameters;
receiving a selection of one of the two or more objects on the interface;
installing an application corresponding to the selection of the one of the two or more objects, the application including a set of start parameters for controlling operation of the image forming device;
using the set of start parameters in the image forming device; and
executing, by a processor in the image forming device, an operation according to the set of start parameters.

The invention further relates to a computer program comprising instructions which, when the program is executed by a computer, cause the computer to carry out the steps of the method described above.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a block diagram illustrating a circuit configuration of main elements of an image forming apparatus according to an embodiment;
Fig. 2 is a diagram illustrating a home screen displayed on a touch panel shown in Fig. 1;
Fig. 3 is a diagram illustrating a home table included in a home DB shown in Fig. 1;
Fig. 4 is a diagram illustrating an icon table included in an application DB shown in Fig. 1;
Fig. 5 is a diagram illustrating an application table included in the application DB shown in Fig. 1;
Fig. 6 is a flowchart depicting a processing performed by a processor of the image forming apparatus shown in Fig. 1;
Fig. 7 is a flowchart depicting a processing performed by the processor of the image forming apparatus shown in Fig. 1;
Fig. 8 is a flowchart depicting a processing performed by the processor of the image forming apparatus shown in Fig. 1;
Fig. 9 is a flowchart depicting a processing performed by the processor of the image forming apparatus shown in Fig. 1;
Fig. 10 is a flowchart depicting a processing performed by the processor of the image forming apparatus shown in Fig. 1;
Fig. 11 is a flowchart depicting a processing performed by the processor of the image forming apparatus shown in Fig. 1;
Fig. 12 is a diagram illustrating file contents of an attribute file of a first type application according to the embodiment;
Fig. 13 is a diagram illustrating file names and file contents of three parameter files side by side according to the embodiment;
Fig. 14 is a diagram illustrating file contents of an attribute file of a second type application according to the embodiment;
Fig. 15 is a diagram illustrating a selection screen displayed on the touch panel shown in Fig. 1;
Fig. 16 is a diagram illustrating a button screen displayed on the touch panel shown in Fig. 1;
Fig. 17 is a diagram illustrating an adding screen displayed on the touch panel shown in Fig. 1; and
Fig. 18 is a diagram illustrating a setting screen displayed on the touch panel shown in Fig. 1.

### DETAILED DESCRIPTION

In accordance with an embodiment, an image forming apparatus comprises an installation section configured to install an application and a plurality of different start parameters for the application; an association section configured to associate one start parameter selected from the plurality of start parameters and the application with an object; and an execution section configured to execute the application associated with the object using the start parameter associated with the object in response to an operation input on the object.

Hereinafter, an image forming system according to several embodiments is described with reference to the accompanying drawings. In the respective figures used in the description of the following embodiments, the configuration may be omitted for the convenience of description. The same components are denoted with the same reference numerals in the respective figures.

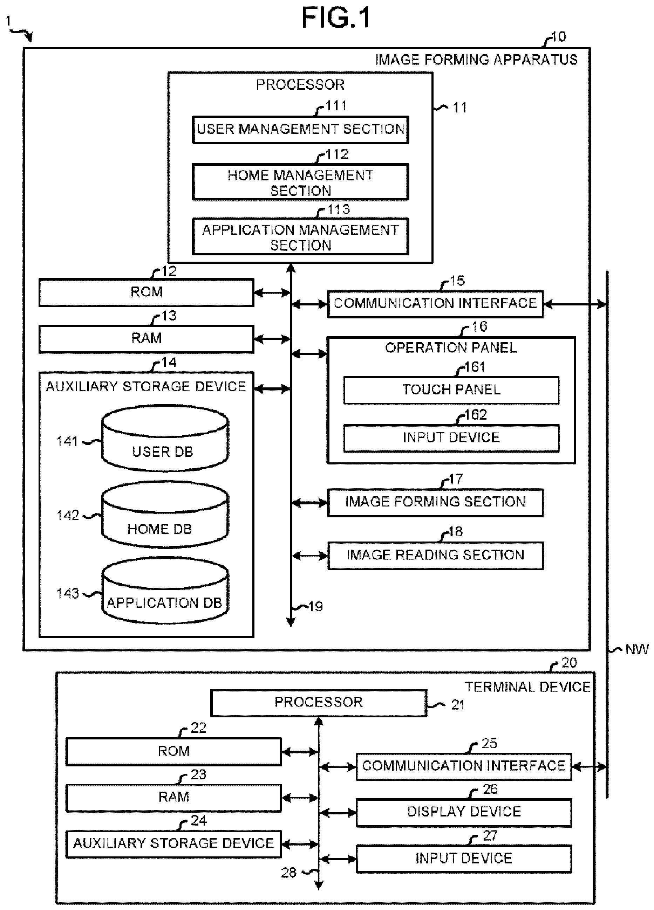

Fig. 1 is a block diagram illustrating circuit configurations of main elements of an image forming system 1 and respective devices constituting the image forming system 1 according to the embodiment. For example, the image forming system 1 comprises an image forming apparatus 10 and a terminal device 20.

The image forming apparatus 10 and the terminal device 20 are connected to a network NW. The network NW is typically a private network such as an intranet. The network NW is typically an LAN (local area network). The network NW may be the Internet. The network NW may be a WAN (Wide Area Network). The network NW may be a wireless line or a wired line, or a combination of the wireless line and the wired line. The network NW may be a dedicated line or a public mobile telephone network.

The image forming apparatus 10 is, for example, an MFP (Multi-Function Peripheral), a copying machine, a printer or a facsimile. For example, the image forming apparatus 10 includes a printing function, a scanning function, a copying function, a decoloring function, a facsimile function, and the like. The printing function is a function of forming an image on an image forming medium P using a recording material such as a toner or ink. For example, the image forming medium P is a sheet-like paper. The scanning function is a function of reading an image from a document on which the image is formed. The copying function is a function of printing the image read from the document through the scanning function on the image forming medium P by using the printing function. The decoloring function is a function of decoloring an image formed with a decolorable recording material on the image forming medium P.

A pre-registered user can log in to the image forming apparatus 10. The image forming apparatus 10 operates according to settings defined for each user during login of the user. A state in which the user logs in to the image forming apparatus 10 is hereinafter referred to as a "login state". A state in which the user does not log in to the image forming apparatus 10 is hereinafter referred to as a "logout state".

The image forming apparatus 10 includes, for example, a processor 11, a ROM (Read-Only Memory) 12, a RAM (Random-Access Memory) 13, an auxiliary storage device 14, a communication interface 15, an operation panel 16, an image forming section 17 and an image reading section 18. Then, these sections are connected to one another via a bus 19 or the like.

The processor 11 acts as a central component of a computer which performs a processing such as an arithmetic processing or a control processing necessary for the operation of the image forming apparatus 10. The processor 11 executes programs such as system software, application software or firmware stored in the ROM 12 or the auxiliary storage device 14 to control each section to perform various functions of the image forming apparatus 10. The processor 11 is, for example, a CPU (Central Processing Unit), an MPU (Micro Processing Unit), an SoC (System on a Chip), a DSP (Digital Signal Processor), a GPU (Graphics Processing Unit), an ASIC (Application Specific Integrated Circuit), a PLD (Programmable Logic Device), or an FPGA (Field-Programmable Gate Array). Alternatively, the processor 11 may be a combination of plural ones among the above devices.

The processor 11 is an example of a processing section. The computer having the processor 11 as the central component thereof is an example of the processing section. The computer having the processor 11 as the central component cooperates with the RAM 13 to function as a user management section 111, a home management section 112 and an application management section 113 according to a program.

The user management section 111 manages a user DB (database) 141 described below. The home management section 112 manages a home DB 142 described below. The application management section 113 manages an application DB 143 described below.

The ROM 12 acts as a main storage component of the computer with the processor 11 as the central component. The ROM 12 is a non-volatile memory exclusively used for reading data. The ROM 12 stores the above programs. The ROM 12 stores data used for the processor 11 to perform various processing or various setting values.

The RAM 13 acts as a main storage component of the computer with the processor 11 as the central component. The RAM 13 is a memory used for reading and writing data. The RAM 13 is used as a so-called work area for storing data temporarily used for the processor 11 to perform various processing.

The auxiliary storage device 14 acts as an auxiliary storage component of the computer with the processor 11 as the central component. The auxiliary storage device 14 is, for example, an EEPROM (Electric Erasable Programmable Read-Only Memory), an HDD (Hard Disk Drive), an SSD (Solid State Drive), an eMMC (embedded MultiMediaCard) or the like. The auxiliary storage device 14 may store the above programs. The auxiliary storage device 14 stores data used by the processor 11 to perform various processing, data generated in a processing performed by the processor 11, or various setting values. The image forming apparatus 10 may include an interface into which a storage medium such as a memory card or a USB (Universal Serial Bus) memory can be inserted as the auxiliary storage device 14. The interface is used to read and write information from and to the storage medium.

The auxiliary storage device 14 stores the user DB 141, the home DB 142, and the application DB 143.

The user DB 141 manages information relating to users. The user DB 141 stores a user ID (identifier) and authentication information for the user ID in an associated manner. The user ID is uniquely assigned to each user. The authentication information is used for authentication at time of login of a user. For example, the authentication information is used to determine whether or not an input password is correct in the authentication for login. Alternatively, the authentication information may be used to determine whether or not input biometric information is correct in biometric authentication for login.

The home DB 142 manages a home screen. The home screen can be customized for each user. The home DB 142 stores settings of the home screen for each user. The settings include a type and a position of an icon displayed on the home screen. The home DB 142 also stores settings of the home screen displayed in the logout state.

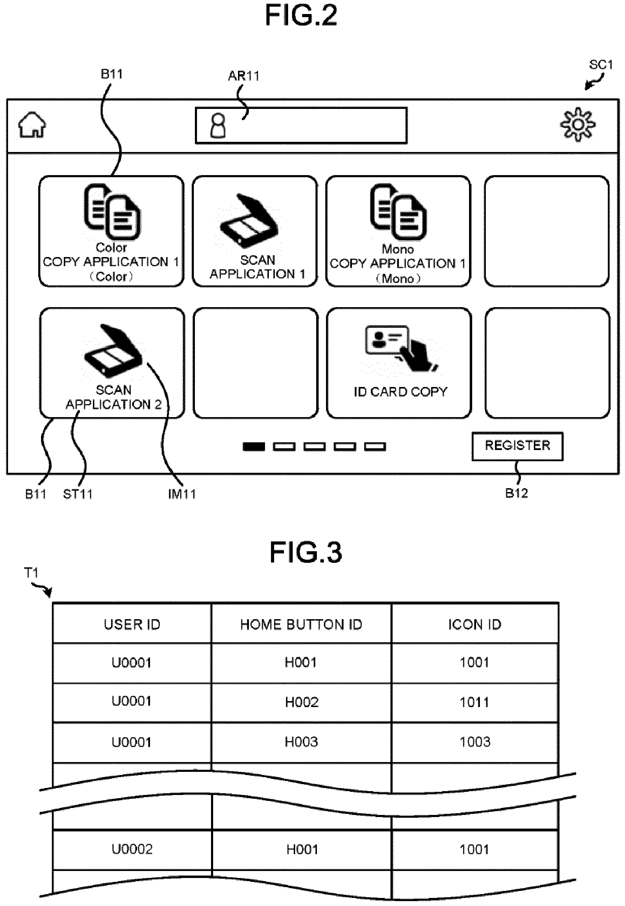

For example, the home screen is a screen shown in Fig. 2. Fig. 2 is a diagram illustrating a home screen SC1 displayed on a touch panel 161. The home screen SC1 includes a plurality of icon buttons B11, a registration button B12 and an area AR11. In the area AR11, a character string or the like for specifying a user during login is displayed. For example, the character string is a user name or a user ID. Each icon button B11 is associated with a specific function. Each icon button B11 is operated by an operator to instruct the image forming apparatus 10 to execute the function associated therewith. Each icon button B11 includes an image IM11 and a character string ST11. The image IM11 and the character string ST11 indicate, for example, the function associated with the icon button B11. The number of icon buttons B11 displayed on the home screen is not limited. The icon button B11 is an example of an object. The registration button B12 is operated by the operator when the operator registers an icon button on the home screen.

For example, the home DB 142 includes a home table. Fig. 3 is a diagram illustrating a home table T1 included in the home DB 142. The home table T1 stores a home button ID and an icon ID in association with the user ID.

The user ID in the home table T1 specifies a user for which information relating to icons of the home screen is indicated by the record containing the user ID.

The home button ID specifies a position on the home screen. The home button ID in the home table T1 specifies a position of an icon whose information is indicated by the record containing the home button ID.

The icon ID specifies an icon button. The settings for the icon button specified by the icon ID are defined in the application DB 143.
specifically, the home table T1 indicates that the icon button specified by the icon ID is displayed at the position specified by the home button ID on the home screen for the user specified by the user ID. The home table T1 associates the icon button with the icon button B11.

The home table T1 stores the home button ID and the icon ID in association with a specific user ID for a home screen displayed in the logout state. The specific user ID is a predetermined user ID indicating that the user does not log in to the image forming apparatus. For example, the image forming apparatus 10 uses U0000 as the specific user ID, and uses U0001 or the following as the user ID of each user.

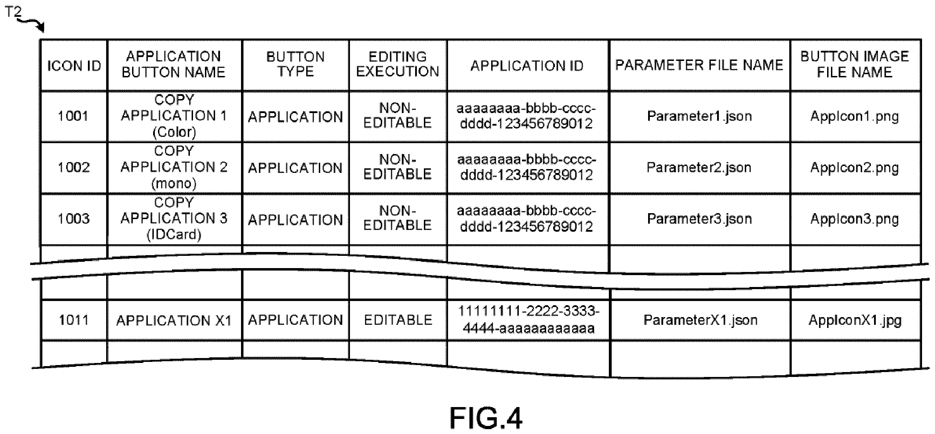

The application DB 143 manages information relating to applications. The application DB 143 includes, for example, an icon table and an application table. Fig. 4 is a diagram illustrating an icon table T2 included in the application DB 143. The icon table T2 stores an application button name, a button type, editing execution information, an application ID, a parameter file name and a button image file name in association with the icon ID. Specifically, the icon table T2 stores information such as settings of the icon button in association with the icon ID.

The application button name indicates a name of the icon button.

The button type indicates a type of the function performed when the icon button is operated. The button type includes, for example, an application, a basic function or an URI (Uniform Resource Identifier). The icon button whose button type is an application is used for starting the application. The description of the other button types is omitted. The editing execution information indicates whether or not the setting of the icon button is editable. For example, if the editing execution information is "non-editable", the setting of the icon button is not editable. If the editing execution information is "editable", the setting of the icon button is editable.

The application ID specifies an application. The application ID is uniquely assigned to each application.

The parameter file name specifies a parameter file in which the setting of the application is recorded. The information for specifying such a file is, for example, a file name or a file path of the file.

The button image file name specifies a file storing the image included in the icon button. The information for specifying such a file is, for example, a file name or a file path of the file.

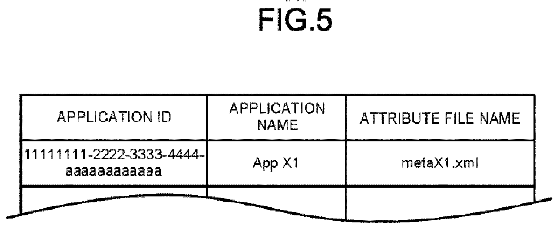

Fig. 5 is a diagram illustrating an application table T3 included in the application DB 143. The application table T3 is a list of applications for which the setting of the icon button is editable among the applications installed in the image forming apparatus 10. The application table T3 stores an application name and an attribute file name in association with the application ID.

The application name indicates a name of the application.

The attribute file name specifies an attribute file. The information for specifying the attribute file is, for example, a file name or a file path of the attribute file. The attribute file includes metadata (application attribute) setting of an application.

The programs stored in the ROM 12 or the auxiliary storage device 14 include a program for executing a processing described below. For example, the image forming apparatus 10 is transferred to an administrator of the image forming apparatus 10 with the program stored in the ROM 12 or the auxiliary storage device 14. However, the image forming apparatus 10 may be transferred to the administrator in a state in which the program is not stored in the ROM 12 or the auxiliary storage device 14. The image forming apparatus 10 may be transferred to the administrator with another program different from the above program stored in the ROM 12 or the auxiliary storage device 14. Then, the program for executing the processing described below may be separately transferred to the administrator, and may be written into the ROM 12 or the auxiliary storage device 14 through the operation performed by the administrator or a service person. The transfer of the program at this time may be realized by recording the program in a removable storage medium such as a magnetic disk, a magneto-optical disk, an optical disk, a semiconductor memory or the like, or by downloading the program via a network such as the network NW.

The programs stored in the auxiliary storage device 14 may include an application for adding a function or the like to the image forming apparatus 10. For example, the image forming apparatus 10 is transferred to the administrator of the image forming apparatus 10 in a state in which the application is not stored in the ROM 12 or the auxiliary storage device 14. Then, the application separately transferred to the administrator may be written into the auxiliary storage device 14 through the operation performed by the administrator or a service person. The image forming apparatus 10 may be transferred to the administrator in a state in which the application is stored in the ROM 12 or the auxiliary storage device 14. The transfer of the application may be realized by recording the application in a removable recording medium such as a magnetic disk, a magneto-optical disk, an optical disk, a semiconductor memory or the like, or by downloading the application via a network such as the network NW.

The communication interface 15 is an interface through which the image forming apparatus 10 performs communication via the network or the like.

The operation panel 16 includes man-machine interfaces for performing input and output between the image forming apparatus 10 and the operator of the image forming apparatus 10. The operation panel 16 includes the touch panel 161 and an input device 162 to be operated by the operator, for example.

The touch panel 161 is, for example, formed by superimposing a display such as a liquid crystal display or an organic EL (Electro-Luminescence) display and a pointing device for touch input. Therefore, the touch panel 161 functions as an input device for receiving an operation performed by the operator. The display of the touch panel 161 functions as a display device for providing various kinds of information to the operator. The input device 162 receives an operation performed by the operator of the image forming apparatus 10. The input device 162 is a keypad or a keyboard, for example. The image forming section 17 prints an image on the image forming medium P by forming an image using the recording material. For example, the image forming section 17 may be a printer of an electrophotographic system, an inkjet printer, or another type of printer. The image forming section 17 performs printing with the printer.

The image reading section 18 reads an image from a document. The image reading section 18 is a scanner for reading the image from the document. For example, the scanner is a scanner of an optical reduction system provided with an image capturing element such as a CCD (Charge-Coupled Device) image sensor. Alternatively, the scanner may be a scanner of a CIS (Contact Image Sensor) system provided with an image capturing element such as a CMOS (Complementary Metal-Oxide-Semiconductor) image sensor. The scanner may be a scanner of another known system.

The bus 19 is a control bus, an address bus, a data bus, or the like, and transmits signals transmitted and received among respective sections of the image forming apparatus 10.

The terminal device 20 is a PC (Personal Computer), a server, a tablet PC, a smart phone, or the like. For example, the terminal device 20 includes a processor 21, a ROM 22, a RAM 23, an auxiliary storage device 24, a communication interface 25, a display device 26 and an input device 27. Then, these sections are connected to one another via a bus 28 and the like.

The processor 21 acts as a central component of a computer which performs a processing such as an arithmetic processing or a control processing necessary for the operation of the terminal device 20. The processor 21 executes programs such as system software, application software or firmware stored in the ROM 22 or the auxiliary storage device 24 to control each section to perform various functions of the terminal device 20. A part or all of the programs may be incorporated into a circuit of the processor 21. The processor 21 is, for example, a CPU, an MPU, an SoC, a DSP, a GPU, an ASIC, a PLD, an FPGA or the like. Alternatively, the processor 21 may be a combination of plural ones among the above devices.

The ROM 22 acts as a main storage component of the computer with the processor 21 as the central component. The ROM 22 is a non-volatile memory exclusively used for reading data. The ROM 22 stores the above programs. The ROM 22 stores data used for the processor 21 to perform various processing or various setting values.

The RAM 23 acts as a main storage component of the computer with the processor 21 as the central component. The RAM 23 is a memory used for reading and writing data. The RAM 23 is used as a so-called work area for storing data temporarily used for the processor 21 to perform various processing.

The auxiliary storage device 24 acts as an auxiliary storage component of the computer with the processor 21 as the central component. The auxiliary storage device 24 is, for example, an EEPROM, an HDD, an SSD, an eMMC or the like. The auxiliary storage device 24 may store the above programs. The auxiliary storage device 24 stores data used by the processor 21 to perform various processing, data generated in a processing performed by the processor 21, or various setting values.

The programs stored in the ROM 22 or the auxiliary storage device 24 include a program for executing a processing described below. For example, the terminal device 20 is transferred to an administrator of the terminal device 20 with the program stored in the ROM 22 or the auxiliary storage device 24. However, the terminal device 20 may be transferred to the administrator in a state in which the program is not stored in the ROM 22 or the auxiliary storage device 24. The terminal device 20 may be transferred to the administrator with another program different from the above program stored in the ROM 22 or the auxiliary storage device 24. Then, the program for executing the processing described below may be separately transferred to the administrator, and may be written into the ROM 22 or the auxiliary storage device 24 through the operation performed by the administrator or a service person. The transfer of the program at this time may be realized by recording the program in a removable storage medium such as a magnetic disk, a magneto-optical disk, an optical disk, a semiconductor memory or the like, or by downloading the program via a network such as the network NW.

The communication interface 25 is an interface through which the terminal device 20 performs communication via the network NW or the like.

The display device 26 displays a screen for providing various kinds of information to an operator of the terminal device 20. The display device 26 is, for example, a display such as a liquid crystal display or an organic EL display.

The input device 27 receives an operation performed by the operator of the terminal device 20. The input device 27 is, for example, a keyboard, a keypad, a touch pad, a mouse, or the like. A touch panel may also be used as the display device 26 and the input device 27. Specifically, a display panel of the touch panel can be used as the display device 26, and a pointing device that is touched to perform input in the touch panel can be used as the input device 27.

The bus 28 includes a control bus, an address bus, a data bus, and the like, and transmits signals transmitted and received among respective sections of the terminal device 20.

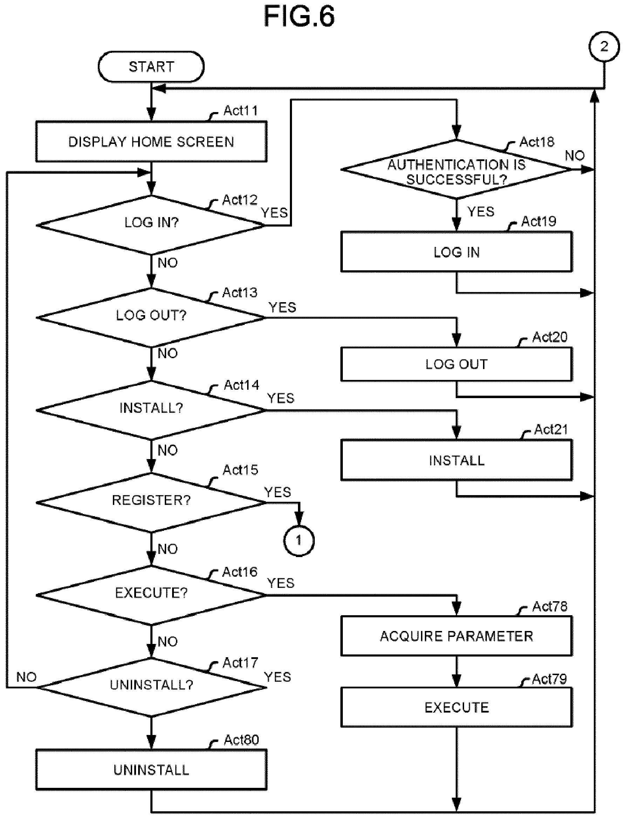

Below, an operation of the image forming system 1 according to the embodiment is described with reference to Fig. 6 to Fig. 11. The contents of the processing in the following operation description are merely an example, and various processing capable of achieving the same results can be appropriately used. Fig. 6 to Fig. 11 are flowcharts depicting an example of a processing performed by the processor 11 of the image forming apparatus 10. The processor 11 executes the processing by executing the program stored in the ROM 12 or the auxiliary storage device 14. If the processor 11 proceeds to the processing in Act (N + 1) (N is a natural number) after the processing in Act N, the description relating to such transition may be omitted below.

The processor 11 starts the processing shown in Fig. 6 if the image forming apparatus 10 is started.

In Act 11 in Fig. 6, the processor 11 of the image forming apparatus 10 generates an image of the home screen SC1 as shown in Fig. 2. Specifically, if the image forming apparatus 10 is in the login state, the processor 11 generates an image of the home screen SC1 corresponding to the user during login based on the home table T1 and the icon table T2. If the image forming apparatus 10 is in the logout state, the processor 11 generates an image of the home screen SC1 in the logout state based on the home table T1 and the icon table T2. The processor 11 instructs the touch panel 161 to display the image generated as described above. In response to the instruction, the touch panel 161 displays the home screen SC1.

In Act 12 in Fig. 6, the processor 11 determines whether or not a login operation is performed. The operator who intends to log in to the image forming apparatus 10 performs the login operation as follows, for example. Specifically, the operator operates, for example, the operation panel 16 to input a user ID and a password. Alternatively, the operator may use a card reader of the image forming apparatus 10 to read an ID card that he/she possesses. The ID card stores information such as the user ID that is necessary for login. The operator may perform the login operation by biometric authentication. The image forming apparatus 10 may automatically perform the biometric authentication if the operator is present within a predetermined distance. In this case, the processor 11 determines that the login operation is performed. If no login operation is performed, the processor 11 takes No in Act 12, and proceeds to the processing in Act 13.

In Act 13, the processor 11 determines whether to perform a logout operation. For example, the processor 11 determines to perform the logout operation if an operation for instructing logout is performed. The processor 11 may determine to perform the logout operation, for example, if a predetermined period of time or more elapses since there is no operation. If the image forming apparatus 10 is in the logout state, the processor 11 determines not to perform the logout operation. If the processor 11 determines not to perform the logout operation, the processor 11 takes No in Act 13, and proceeds to the processing in Act 14.

In Act 14, the processor 11 determines whether to install an application. For example, the processor 11 determines to install the application if an operation for instructing to install the application is performed. If the processor 11 determines not to install the application, the processor 11 takes No in Act 14, and proceeds to the processing in Act 15.

In Act 15, the processor 11 determines whether or not an operation for instructing to display a selection screen is performed. For example, the processor 11 determines the operation for instructing to display a selection screen is performed in response to an operation on the registration button B12 shown in Fig. 2. If the operation for instructing to display the selection screen is not performed, the processor 11 takes No in Act 15 in Fig. 6, and proceeds to the processing in Act 16.

The processor 11 determines whether to execute an application in Act 16. If the processor 11 determines not to execute the application, the processor 11 takes No in Act 16, and proceeds to the processing in Act 17.

In Act 17, the processor 11 determines whether to uninstall the installed application. For example, the processor 11 determines to uninstall the application if an operation for instructing to uninstall the application is performed. If the processor 11 determines not to uninstall the application, the processor 11 takes No in Act 17, and returns to the processing in Act 12. Thus, the processor 11 repeats the processing in Act 12 to Act 17 until the login operation is performed, until it is determined to perform the logout operation, until it is determined to install the application, until the operation for instructing to display a selection screen, until it is determined to execute the application, or until it is determined to uninstall the application.

If the login operation is performed in the standby state in Act 12 to Act 17, the processor 11 takes Yes in Act 12, and proceeds to the processing in Act 18.

In Act 18, the processor 11 refers to the user DB to determine whether or not the authentication for the login is successful. For example, the processor 11 determines that the authentication is successful if a combination of the input user ID and password is correct. Alternatively, if the user ID read from the IC card matches the user ID stored in the authentication information, the processor 11 may determine that the authentication is successful. Alternatively, if the biometric information read from the user matches the biometric information stored in the authentication information to a certain extent or more, the processor 11 determines that the authentication is successful. If it is determined that the authentication is not successful, i.e., if it is determined that the authentication fails, the processor 11 takes No in Act 18, and returns to the processing in Act 11. On the other hand, If it is determined that the authentication is successful, the processor 11 takes Yes in Act 18, and proceeds to the processing in Act 19.

The processor 11 executes the login processing in Act 19. For example, the processor 11 stores information for identifying the user who is logging in in the RAM 13. For this purpose, for example, the processor 11 substitutes the user ID of the user who is logging in to the RAM 13. The user who is currently logging in is hereinafter referred to as a "user during login". The user ID of the user during login is hereinafter referred to as a "Login ID". Through the login processing, the image forming apparatus 10 enters into the login state. If the image forming apparatus 10 is in the login state at the start of the processing in the Act 19, the processor 11 performs the login processing after a logout processing. The logout processing is described below. After the processing in Act 19, the processor 11 returns to the processing in Act 11.

If it is determined to perform the logout operation in the standby state in Act 12 to Act 17, the processor 11 takes Yes in Act 13, and proceeds to the processing in Act 20.

In Act 20, the processor 11 performs the logout processing. For example, the processor 11 stores information indicating that no user logs in in the RAM 13. Through the logout processing, the image forming apparatus 10 enters into the logout state. After the processing in Act 20, the processor 11 returns to the processing in Act 11.

If the processor 11 determines to install an application in the standby state in Act 12 to Act 17, the processor 11 takes Yes in Act 14, and proceeds to the processing in Act 21. The processor 11 installs the application in Act 21.

For example, the application is provided as an application package. The application package is an example of a data structure. The application package includes data necessary for the image forming apparatus 10 to install the application. The application package contains an installer. The processor 21 installs the application by executing the installer. The application package may be divided into a plurality of parts.

The installation of two types of applications: an application for which the setting of the icon button is not editable and an application for which the setting of the icon button is editable is described below. An application for which the setting of the icon button is not editable is hereinafter referred to as a "first type application". An application for which the setting of the icon button is editable is hereinafter referred to as a "second type application".

### (1) Installation of First Type Application

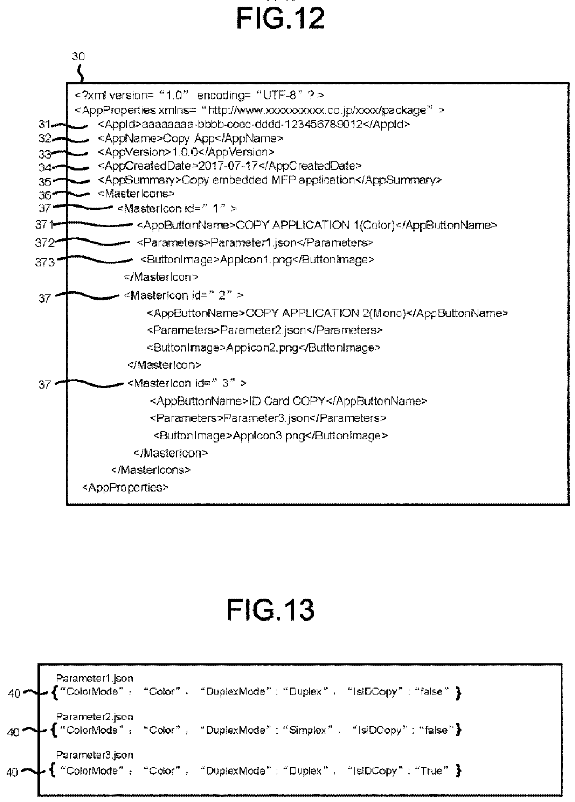

The application package of the first type application includes an attribute file and a button image file. Fig. 12 is a diagram illustrating an example of file contents of the attribute file of the first type application. The attribute file of the first type application is hereinafter referred to a as "first type attribute file". The first type attribute file shown in Fig. 12 is, for example, a text file in XML (Extensible Markup Language) format. However, the first type attribute file is not limited to the text file, and may be a binary file or the like. The format of the first type attribute file is not limited to the XML format.

The first type attribute file includes data 30. The data 30 includes ID information 31, name information 32, version information 33, date information 34, description information 35 and icon information 36.

The ID information 31 includes an application ID.

The name information 32 includes a name of the application.

The version information 33 includes the version of the application.

The date information 34 includes a creation date or an update date of the application.

The description information 35 includes a brief description of the application and the like.

The icon information 36 includes one or a plurality of individual icon information 37. The individual icon information 37 defines an icon button correspondingly. The icon button defined by the individual icon information 37 in the first type attribute file is used for starting the application specified by the ID information 31 in the first type attribute file. The individual icon information 37 includes button name information 371, parameter information 372 and image information 373.

The button name information 371 includes a name of the icon button.

The parameter information 372 includes information for specifying the parameter file. The parameter file contains the start parameter of the icon button. The information for specifying the parameter file is, for example, a file name or a file path of the parameter file. Fig. 13 shows the parameter file. In Fig. 13, file names and file contents of three parameter files are shown side by side. The parameter file is a text file in JSON (JavaScript (registered trademark) Object Notation) format, for example. However, the format of the parameter file is not limited to the JSON format. The parameter file is not limited to the text file, and may be a binary file or the like. The parameter file includes data 40. The data 40 includes various settings of the icon button. For example, parameter1.json to parameter3. Json in Fig. 13 includes three setting items: ColorMode (color mode), DuplexMode (duplex/simplex mode), and IsIDCopy (ID copy). For example, for the parameter1.json, the setting value (parameter) of ColorMode is Color, the setting value of DuplexMode is Duplex, and the setting value of IsIDCopy is false. The parameter file is an example of a parameter set including one or more start parameters.

The image information 373 includes information for specifying an image displayed in the icon button. The information for specifying the image is, for example, a file name or a file path of the image file.

The processor 11 copies the first type attribute file and the button image file included in the application package to store them in the auxiliary storage device 14 at the time of installing the first type application.

The processor 11 respectively adds a record corresponding to the individual icon information 37 to the icon table T2 at time of installing the first type application. Specifically, the processor 11 generates a unique icon ID. Then, the processor 11 writes the generated icon ID into the icon ID field of the new record. Furthermore, the processor 11 respectively writes a name included in the button name information 371 into the application button name field of the new record, "application" into the button type field, "non-editable" into the editing execution field, the application ID included in the ID information 31 into the application ID field, information for specifying the parameter file included in the parameter information 372 in the parameter file name field, and information for specifying an image in the image information 373 into the button image file name field. As described above, the records, the number of which is the same as an amount of the individual icon information 37 included in the first type attribute file, are added to the icon table T2.

However, if it is determined that the parameter file contains a setting value not supported by the image forming apparatus 10, the processor 11 does not add the record corresponding to the parameter file to the icon table T2. For example, for parameter3.json shown in Fig. 3, the setting value of IsIDCopy is True. For example, if the operation at the time the setting value of IsIDCopy is True cannot be performed because the image forming apparatus 10 does not support the ID copying function, the processor 11 skips the operation of adding the record in which the parameter file name field is the information for specifying parameter3.json.

Alternatively, if it is determined that the parameter file contains a setting value not supported by the image forming apparatus 10, the processor 11 may delete the setting value from the parameter file.

If it is determined that the parameter file contains a setting value not supported by the image forming apparatus 10, the processor 11 may rewrite the setting value using another value. At this time, the processor 11 may rewrite the combination of the setting item and the setting value using a combination of another setting item and another setting value instead of the setting value. The method to rewrite the setting value or the combination of the setting item and the setting value is predetermined by, for example, a designer or an administrator of the image forming apparatus 10.

### (2) Installation of Second Type Application

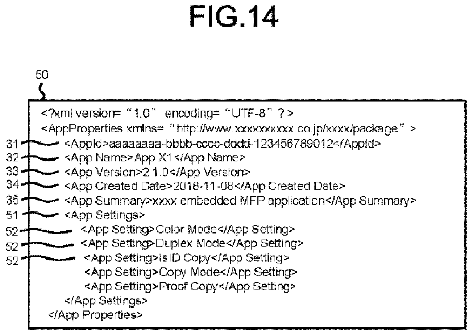

The application package of the second type application includes an attribute file. Fig. 14 is a diagram illustrating file contents of the attribute file of the second type application. The attribute file of the second type application is hereinafter referred to as a "second type attribute file". The second type attribute file shown in Fig. 14 is, for example, a text file in XML format. However, the second type attribute file is not limited to the text file, and may be a binary file or the like. The format of the second type attribute file is not limited to the XML format.

The second type attribute file includes data 50. The data 50 includes ID information 31, name information 32, version information 33, date information 34, description information 35 and setting information 51.

The setting information 51 shows a list of settable items. The setting information 51 includes one or more setting items 52. The setting items 52 are all settable. The second type attribute file shown in Fig. 14 indicates that the settings are editable for five setting items including ColorMode (color/monochrome), DuplexMode (duplex mode), IsIDCopy (ID copy), CopyMode (document mode) and ProofCopy (test copy). The setting items may be set for a function or an operation provided in advance by the image forming apparatus 10, or may be set for a function or an operation added to the image forming apparatus 10 at the time of installing the second type application.

The processor 11 copies the second type attribute file included in the application package and stores it in the auxiliary storage device 14 at the time of installing the second type application.

The processor 11 adds a record to the application table T3 based on the second type attribute file at the time of installing the second type application. Specifically, the processor 11 writes the application ID included in the ID information 31 into the application ID field of the new record of the application table T3, the name of the application included in the name information 32 into the application name field, and information for specifying the second type attribute file into the attribute file name field. The information for specifying the second type attribute file is, for example, a file name or a file path of the second type attribute file.

After the processing in Act 21 in Fig. 6, the processor 11 returns to the processing in Act 11.

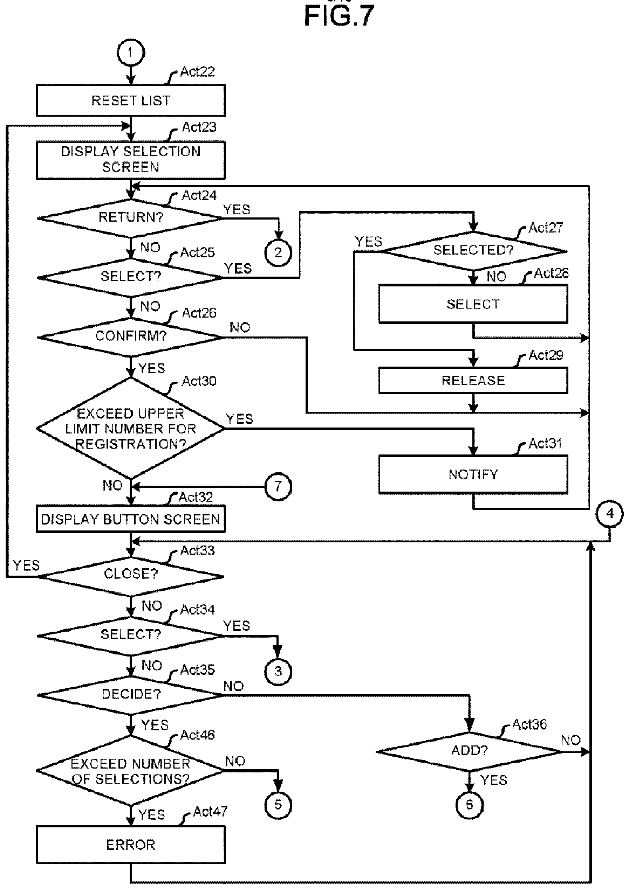

If an operation for instructing to display the selection screen is performed in the standby state in Act 12 to Act 17, the processor 11 takes Yes in Act 15, and proceeds to the processing in Act 22 in Fig. 7.

In Act 22, the processor 11 resets a first selection list and a second selection list stored in the RAM 13. Specifically, the processor 11 sets the first selection list so that the first selection list is in a state in which the home button ID is not registered. The processor 11 sets the second selection list so that the second selection list is in a state in which the icon ID is not registered.

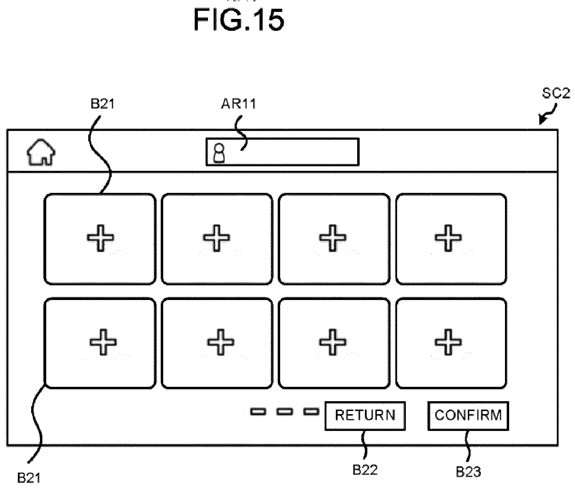

In Act 23, the processor 11 generates an image of the selection screen SC2 as shown in Fig. 15. Then, the processor 11 instructs the touch panel 161 to display the generated image. In response to the instruction, the touch panel 161 displays the selection screen SC2.

Fig. 15 is a diagram illustrating the selection screen SC2 displayed on the touch panel 161. The selection screen SC2 is used for selecting a position for registration of an icon button. The selection screen SC2 includes an area AR11, a plurality of first selection buttons B21, a return button B22 and a confirmation button B23.

The first selection button B21 is operated to switch a state thereof between a selected state and a non-selected state. The first selection button B21 has different appearances in the selected state and in the non-selected state. Thus, the operator can identify whether the first selection button B21 is in the selected state or in the non-selected state. The home button ID is associated with each of the first selection buttons B21. As described above, the home button ID specifies the position on the home screen. Therefore, each first selection button B21 corresponds to any one of positions on the home screen.

The return button B22 is used for instructing the image forming apparatus 10 to return from the selection screen SC2 to the home screen SC1.

The confirmation button B23 is operated by the operator to instruct the image forming apparatus 10 to display a button screen SC3. The confirmation button B23 cannot be operated unless one or more first selection buttons B21 are in the selected state.

In Act 24, the processor 11 determines whether or not the return button B22 is operated. If the return button B22 is not operated, the processor 11 takes No in Act 24, and proceeds to the processing in Act 25.

In Act 25, the processor 11 determines whether or not the first selection button B21 is operated. If the first selection button B21 is not operated, the processor 11 takes No in Act 25, and proceeds to the processing in Act 26.

In Act 26, the processor 11 determines whether or not the confirmation button B23 is operated. If the confirmation button B23 is not operated, the processor 11 takes No in Act 26, and returns to the processing in Act 24. Thus, the processor 11 repeats the processing in Act 24 to Act 26 until the return button B22, the first selection button B21 or the confirmation button B23 is operated.

If the return button B22 is operated in the standby state in Act 24 to Act 26, the processor 11 takes Yes in Act 24, and returns to the processing in Act 11 in Fig. 6.

If the first selection button B21 is operated in the standby state in Act 24 to Act 26 in Fig. 7, the processor 11 takes Yes in Act 25, and proceeds to the processing in Act 27. The first selection button B21 operated at last is hereinafter referred to as a "first target button" for the convenience of description.

In Act 27, the processor 11 determines whether or not the first target button is in the selected state. If the first target button is not in the selected state, the processor 11 takes No in Act 27, and proceeds to the processing in Act 28.

In Act 28, the processor 11 sets the first target button to the selected state. Furthermore, in Act 28, the processor 11 registers the home button ID associated with the first target button in the first selection list. At this time, for example, the processor 11 registers the home button ID in the first selection list in such a manner that an order in which the home button ID is registered in the first selection list can be understood. After the processing in Act 28, the processor 11 returns to the processing in Act 24.

On the other hand, if the first target button is in the selected state, the processor 11 takes Yes in Act 27, and proceeds to the processing in Act 29.

In Act 29, the processor 11 releases the selection of the first target button to set the first target button to the non-selected state. Furthermore, in Act 29, the processor 11 deletes the home button ID associated with the first target button from the first selection list. After the processing in Act 29, the processor 11 returns to the processing in Act 24. The operator operates the confirmation button B23 in a state in which the first selection button B21 located at the position where the icon button is desired to be registered is in the selected state.

If the confirmation button B23 is operated in the standby state in Act 24 to Act 26, the processor 11 takes Yes in Act 26, and proceeds to the processing in Act 30.

In Act 30, the processor 11 determines whether or not the number of registered icon buttons exceeds an upper limit. Specifically, the processor 11 determines whether or not the number, which is obtained by adding the number of first selection buttons in the selected state to the number of records in which the user ID is the same as the user Login ID in the icon table T2, exceeds an upper limit number for registration. The upper limit number for registration indicates an upper limit number of icon buttons that can be registered in the home screen for each user. The upper limit number for registration is preset by a designer, an administrator or each user of the image forming apparatus 10. The upper limit number for registration may be different for each user, or may be the same value for all users. If it is determined that the number of registered icon buttons exceeds the upper limit, the processor 11 takes Yes in Act 30, and proceeds to the processing in Act 31.

In Act 31, the processor 11 notifies that the number of registered icon buttons exceeds the upper limit. For example, the processor 11 controls the touch panel 161 to display that the number of registered icon buttons exceeds the upper limit. After the processing in Act 31, the processor 11 returns to the processing in Act 24.

If it is determined that the number of registered icon buttons does not exceed the upper limit, the processor 11 takes No in Act 30, and proceeds to the processing in Act 32.

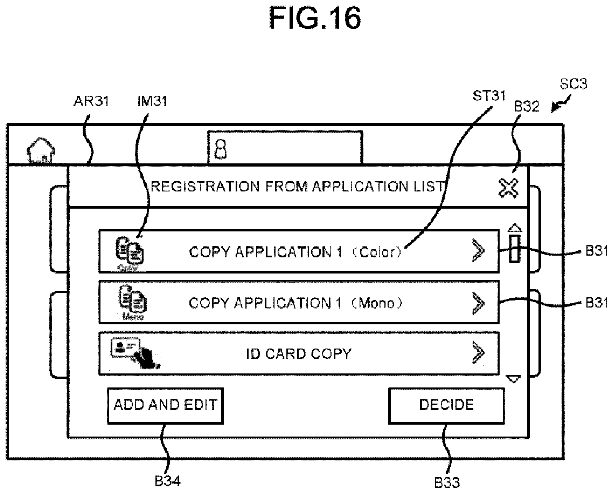

In Act 32, the processor 11 generates an image of the button screen SC3 as shown in Fig. 16. Then, the processor 11 instructs the touch panel 161 to display the generated image. In response to the instruction, the touch panel 161 displays the button screen SC3.

Fig. 16 is a diagram illustrating the button screen SC3 displayed on the touch panel 161. For example, the button screen SC3 is a screen obtained by displaying an area AR31 on the selection screen SC2 in a popup manner. The button screen SC3 includes an area AR31, a plurality of second selection buttons B31, a close button B32, a decision button B33 and an adding button B34.

The second selection button B31 is operated to perform switching between a selected state and a non-selected state thereof. The second selection button B31 has different appearances in the selected state and in the non-selected state. Thus, the operator can identify whether the second selection button B31 is in the selected state or in the non-selected state.

Each second selection button B31 includes an image IM31 and a character string ST31. Each of the second selection buttons B31 is associated with an icon ID. The image IM31 is specified by a button image file name associated with the icon ID in the icon table T2. The character string ST31 is an application button name associated with the icon ID in the icon table T2. For example, the second selection button B31 displayed at the top of the button screen SC3 in Fig. 16 is associated with an icon ID 1001. Then, the image IM31 in the second selection button B31 is specified by "Applcon1.png". The character string ST31 in the second selection button B31 is "copy application 1 (Color)".

From the above, the button screen SC3 displays a list of icon buttons included in the icon table T2. The list may be shown in plural pages. Further, the list may be scrollable. The close button B32 is used for instructing the image forming apparatus 10 to close the area AR31 and return from the button screen SC3 to the selection screen SC2.

The decision button B33 is operated by the operator at the time of registering the icon button selected in the button screen SC3 at the position selected in the selection screen SC2. The decision button B33 cannot be operated unless one or more second selection buttons B31 are in the selected state.

The adding button B34 is operated by the operator at the time of editing, adding or deleting the icon button registered in the icon table T2.

In Act 33, the processor 11 determines whether or not the close button B32 is operated. If the close button B32 is not operated, the processor 11 takes No in Act 33, and proceeds to the processing in Act 34.

In Act 34, the processor 11 determines whether or not the second selection button B31 is operated. If the second selection button B31 is not operated, the processor 11 takes No in Act 34, and proceeds to the processing in Act 35.

In Act 35, the processor 11 determines whether or not the decision button B33 is operated. If the decision button B33 is not operated, the processor 11 takes No in Act 35, and proceeds to the processing in Act 36.

In Act 36, the processor 11 determines whether or not the adding button B34 is operated. If the adding button B34 is not operated, the processor 11 takes No in Act 36 and returns to the processing in Act 33. Thus, the processor 11 repeats the processing in Act 33 to Act 36 until the close button B32, the second selection button B31, the decision button B33 or the adding button B34 is operated.

If the close button B32 is operated in the standby state in Act 33 to Act 36, the processor 11 takes Yes in Act 33 and returns to the processing in Act 23.

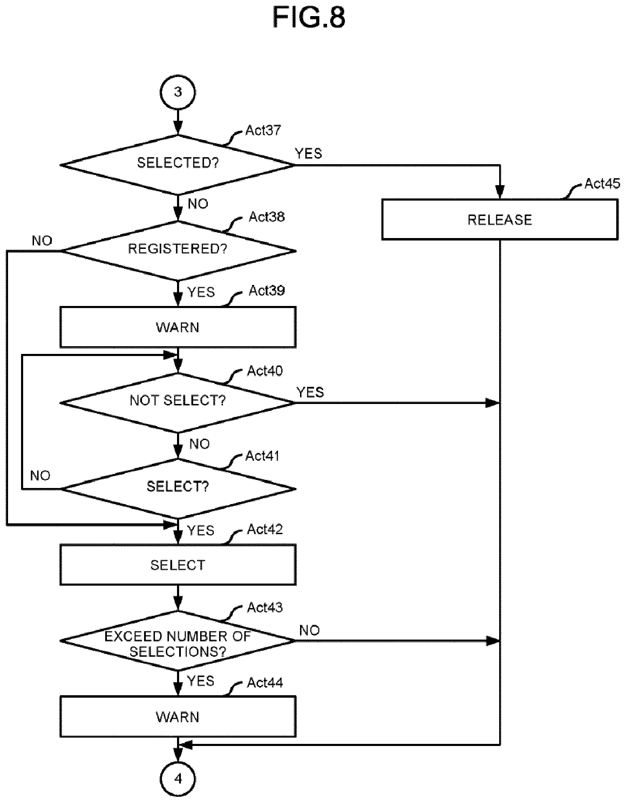

If the second selection button B31 is operated in the standby state in Act 33 to Act 36, the processor 11 takes Yes in Act 34, and proceeds to the processing in Act 37 in Fig. 8. The second selection button B31 operated at last is hereinafter referred to as a "second target button" for the convenience of description.

In Act 37, the processor 11 determines whether or not the second target button is in the selected state. If the second target button is not in the selected state, the processor 11 takes No in Act 37, and proceeds to the processing in Act 38.

In Act 38, the processor 11 determines whether or not the icon button corresponding to the second target button is registered in the home screen for the user during login. Specifically, the processor 11 determines whether or not a record having the same combination as the combination of the login ID and the icon ID associated with the second target button is included in the home table T1. If the icon button corresponding to the second target button is registered in the home screen for the user during login, the processor 11 takes Yes in Act 38, and proceeds to the processing in Act 39.

In Act 39, the processor 11 controls the touch panel 161 to display a warning window on the button screen SC3.

The warning window includes a first warning display, a No button, and a Yes button. The first warning display includes a character string or an image indicating that the icon button corresponding to the second target button is registered in the home screen for the user during login. The first warning display includes a character string or an image for inquiring whether to set the second target button to the selected state. The Yes button is operated by the operator at the time of setting the second target button to the selected state. The No button is operated by the operator at the time of not setting the second target button to the selected state. The processor 11 may notify the same contents as those in the first warning display by a method other than the method of performing display on a display.

In Act 40, the processor 11 determines whether or not an operation for instructing the image forming apparatus 10 not to set the second target button to the selected state, such as an operation of operating the No button is performed. If the operation for instructing the image forming apparatus 10 not to set the second target button to the selected state is not performed, the processor 11 takes No in Act 40, and proceeds to the processing in Act 41.

In Act 41, the processor 11 determines whether or not an operation for instructing the image forming apparatus 10 to set the second target button to the selected state, such as an operation of operating the Yes button, is performed. If operation for instructing the image forming apparatus 10 to set the second target button to the selected state is not performed, The processor 11 takes No in Act 41, and returns to the processing in Act 40. Thus, the processor 11 repeats the processing in Act 40 and Act 41 until the operation for instructing the image forming apparatus 10 not to set the second target button to the selected state or the operation for instructing the image forming apparatus 10 to set the second target button to the selected state is performed.

If the operation for instructing the image forming apparatus 10 not to set the second target button to the selected state is performed in the standby state in Act 40 and Act 41, the processor 11 takes Yes in Act 40, and returns to the processing in Act 33 in Fig. 7. On the other hand, if the operation for instructing the image forming apparatus 10 to set the second target button to the selected state is performed in the standby state in Act 40 and Act 41 in Fig. 8, the processor 11 takes Yes in Act 41, and proceeds to the processing in Act 42. If the icon button corresponding to the second target button is not registered on the home screen for the user during login, the processor 11 takes No in Act 38, and proceeds to the processing in Act 42.

In Act 42, the processor 11 sets the second target button to the selected state. Furthermore, in Act 38, the processor 11 registers the icon ID associated with the second target button in the second selection list. At this time, the processor 11 registers the icon ID in the second selection list, for example, in such a manner that an order in which the icon ID is registered in the second selection list can be understood.

In Act 43, the processor 11 determines whether or not the number of icon IDs registered in the second selection list exceeds the number of home button IDs registered in the first selection list. If the number of icon IDs registered in the second selection list does not exceed the number of home button IDs registered in the first selection list, the processor 11 takes No in Act 43, and returns to the processing in Act 33 in Fig. 7. Contrarily, if the number of icon IDs registered in the second selection list exceeds the number of home button IDs registered in the first selection list, the processor 11 takes Yes in Act 43 in Fig. 8, and proceeds to the processing in Act 44.

In Act 44, the processor 11 controls the touch panel 161 to display a second warning display. The second warning display is an image or a character string indicating that the number of icon buttons to be registered exceeds the number of positions selected for registration of the icon buttons. The processor 11 terminates the display of the second warning display in response to an operation performed by the operator or the like. After the display of the second warning display is terminated, the button screen SC3 as shown in Fig. 16 is displayed on the touch panel 161. The processor 11 may notify the same contents as those in the second warning display by a method other than the display on a display. After the processing in Act 44, the processor 11 returns to the processing in Act 33 in Fig. 7.

If the second target button is in the selected state, the processor 11 takes Yes in Act 37 in Fig. 8, and proceeds to the processing in Act 45.

In Act 45, the processor 11 releases the selection of the second target button to set the second target button to the non-selected state. Furthermore, in Act 45, the processor 11 deletes the icon ID associated with the second target button from the second selection list. After the processing in Act 45, the processor 11 returns to the processing in Act 33 in Fig. 7.

If the decision button B33 is operated in the standby state in Act 33 to Act 36, the processor 11 takes Yes in Act 35, and proceeds to the processing in Act 46.

In Act 46, the processor 11 determines whether or not the number of icon IDs registered in the second selection list exceeds the number of home button IDs registered in the first selection list. If the number of icon IDs registered in the second selection list exceeds the number of home button IDs registered in the first selection list, the processor 11 takes Yes in Act 46 in Fig. 7, and proceeds to the processing in Act 47.

In Act 47, the processor 11 controls the touch panel 161 to display an error display. The error display is an image or a character string indicating that the number of icon buttons to be registered exceeds the number of selected positions for registration of the icon buttons. The processor 11 terminates the display of the error display in response to the operation performed by the operator or the like. After the display of the error display is terminated, the button screen SC3 as shown in Fig. 16 is displayed on the touch panel 161. The processor 11 may notify the same contents as those in the error display by a method other than display on a display. After the processing in Act 47, the processor 11 returns to the processing in Act 33.

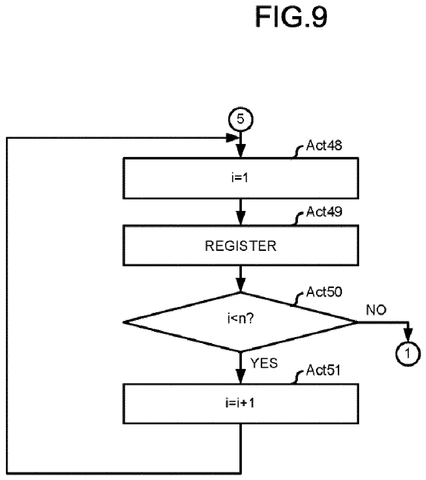

On the other hand, if the number of icon IDs registered in the second selection list does not exceed the number of home button IDs registered in the first selection list, the processor 11 takes No in Act 46, and proceeds to the processing in Act 48 in Fig. 9.

In Act 48, the processor 11 sets the value of a variable i to 1. The variable i is assigned to the RAM 13 or the like.

In Act 49, the processor 11 registers an icon button in the home screen. Specifically, the processor 11 adds a record to the home table T1 in such a manner that an icon button specified by an i-th icon ID registered in the second selection list is displayed at a position specified by an i-th home button ID registered in the first selection list. Specifically, the processor 11 writes the login ID into the user ID field of a new record, the i-th home button ID registered in the first selection list into the home button ID field, and the i-th icon ID registered in the second selection list into the icon ID field. The home button IDs or icon IDs are registered in the first selection list or the second selection list in such a manner that an order thereof such as first, second, third... can be understood.

In Act 50, the processor 11 determines whether or not the value of the variable i is smaller than a value n. The value n is the number of icon IDs registered in the second selection list. If the value of the variable i is smaller than the value n, the processor 11 takes Yes in Act 50, and proceeds to the processing in Act 51.

In Act 51, the processor 11 increases the value of the variable i by 1. After the processing in Act 51, the processor 11 returns to the processing in Act 48.

If the value of the variable i is equal to or greater than the value n, the processor 11 takes No in Act 50, and returns to the processing in Act 22 in Fig. 7.

As described above, by repeating the processing in Act 48 to Act 51, n icon buttons specified by n icon IDs registered in the second selection list are registered in the home screen for the user during login.

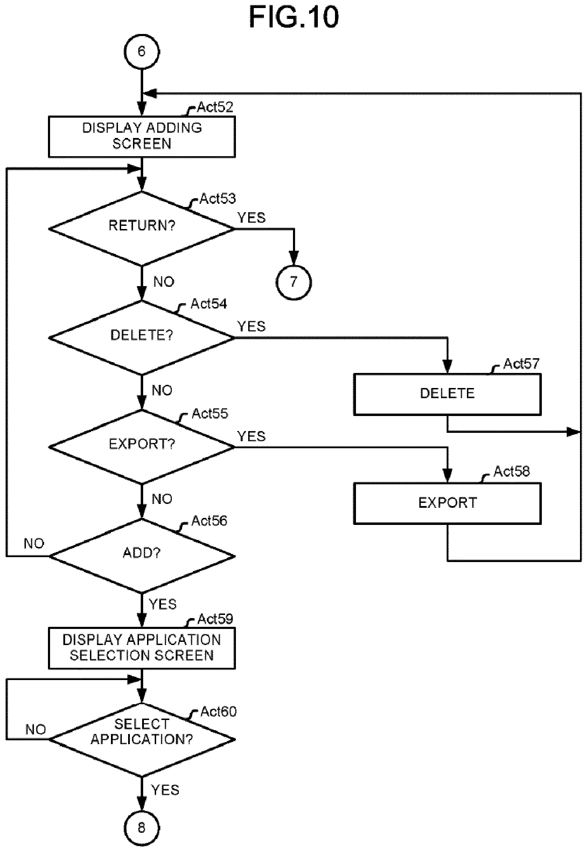

If the adding button B34 is operated in the standby state in Act 33 to Act 36, the processor 11 takes Yes in Act 36, and proceeds to the processing in Act 52 in Fig. 10.

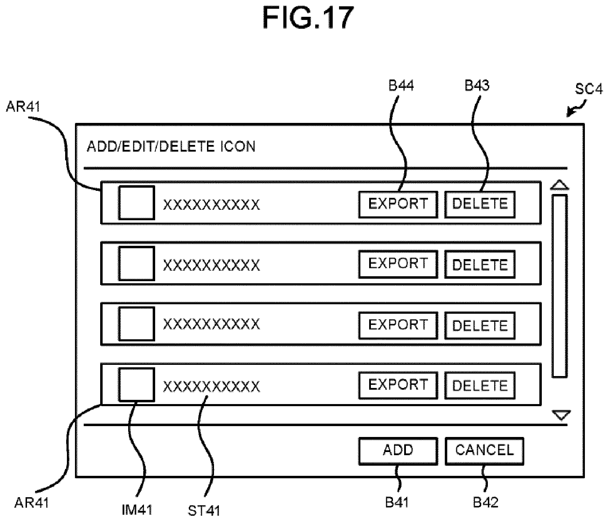

In Act 52, the processor 11 generates an image of an adding screen SC4 as shown in Fig. 17. Then, the processor 11 instructs the touch panel 161 to display the generated image. In response to the instruction, the touch panel 161 displays the adding screen SC4.

Fig. 17 is a diagram illustrating the adding screen SC4 displayed on the touch panel 161. The adding screen SC4 includes a plurality of areas AR41, an adding button B41, and a cancel button B42. Although a plurality of areas AR41 is shown in Fig. 17, the number of areas AR41 is not limited. Each icon ID is associated with each area AR41. For the icon ID associated with the area AR41, the editing execution information associated therewith is "editable" in the icon table T2. Therefore, the adding screen SC4 shows a list of icon buttons for executing the second type application among the icon buttons. Each area AR41 includes an image IM41, a character string ST41, a deletion button B43 and an export button B44.

The image IM41 in the area AR41 is specified by the button image file name associated in the icon table T2 with the icon ID associated with the area AR41.

The character string ST41 in the area AR41 is an application button name associated in the icon table T2 with the icon ID associated with the area AR41.

The deletion button B43 in the area AR41 is operated by the operator at the time of deleting the icon button specified by the icon ID associated with the area AR41 from the icon table T2.

The export button B44 in the area AR41 is operated by the operator at the time of exporting the settings for the icon button specified by the icon ID associated with the area AR41.

The adding button B41 is operated by the operator at the time of adding an icon button to the icon table T2.

The cancel button B42 is operated by the operator at the time of terminating the display of the adding screen SC4.

In Act 53, the processor 11 determines whether or not the cancel button B42 is operated. If the cancel button B42 is not operated, the processor 11 takes No in Act 53, and proceeds to the processing in Act 54.

In Act 54, the processor 11 determines whether or not the deletion button B43 is operated. If the deletion button B43 is not operated, the processor 11 takes No in Act 54, and proceeds to the processing in Act 55.

In Act 55, the processor 11 determines whether or not the export button B44 is operated. If the export button B44 is not operated, the processor 11 takes No in Act 55, and proceeds to the processing in Act 56.

In Act 56, the processor 11 determines whether the adding button B41 is operated. If the adding button B41 is not operated, the processor 11 takes No in Act 56, and returns to the processing in Act 53. Thus, the processor 11 repeats the processing in Act 53 to Act 56 until the cancel button B42, the deletion button B43, the adding button B41 or the export button B44 is operated.

If the cancel button B42 is operated in the standby state in Act 53 to Act 56, the processor 11 takes Yes in Act 53, and returns to the processing in Act 32 in Fig. 7.

If the deletion button B43 is operated in the standby state in Act 53 to Act 56, the processor 11 takes Yes in Act 54, and proceeds to the processing in Act 57.

In Act 57, the processor 11 deletes the record relating to the icon ID associated with the area AR41 including the operated deletion button B43 from the icon table T2. After the processing in Act 57, the processor 11 returns to the processing in Act 52.

If the export button B44 is operated in the standby state in Act 53 to Act 56, the processor 11 takes Yes in Act 55, and proceeds to the processing in Act 58.

In Act 58, the processor 11 exports the setting of the icon button specified by the icon ID associated with the area AR41 including the operated export button B44. For example, the processor 11 generates and outputs an export file including the setting. An output destination of the export file is, for example, a storage medium such as a memory card or a USB inserted into an interface of the image forming apparatus 10. Alternatively, the output destination of the export file may be the terminal device 20. If the output destination is the terminal device 20, the processor 11 instructs the communication interface 15 to transmit the export file. In response to the instruction, the communication interface 15 transmits the export file to the terminal device 20. The transmitted export file is received by the communication interface 25 of the terminal device 20. The output destination of the export file is determined based on operation contents by the operator or the setting.

The processor 21 of the terminal device 20 stores the received export file in the auxiliary storage device 24.

The processor 11 generates the export file in such a manner that the export file includes a record included in the icon table T2 and relating to the icon ID associated with the area AR41 including the operated export button B44. The processor 11 generates the export file in such a manner that the export file includes a parameter file specified in the parameter file name field of the record and an image file specified in the button image file name field of the record.

After the processing in Act 58, the processor 11 returns to the processing in Act 52.

If the adding button B41 is operated in the standby state in Act 53 to Act 56, the processor 11 takes Yes in Act 56, and proceeds to the processing in Act 59.

In Act 59, the processor 11 generates an image of an application selection screen. Then, the processor 11 instructs the operation panel 16 to display the generated image. In response to the instruction, the operation panel 16 displays the application selection screen.

The application selection screen is used for selection of an application. However, the application selectable in the application selection application is the second type application. The application selection screen shows a list of second type applications. The processor 11 acquires a list of second type applications by referring to the application table T3.

The operator selects an application to be added as an icon button to be added to the icon table T2 using the application selection screen.

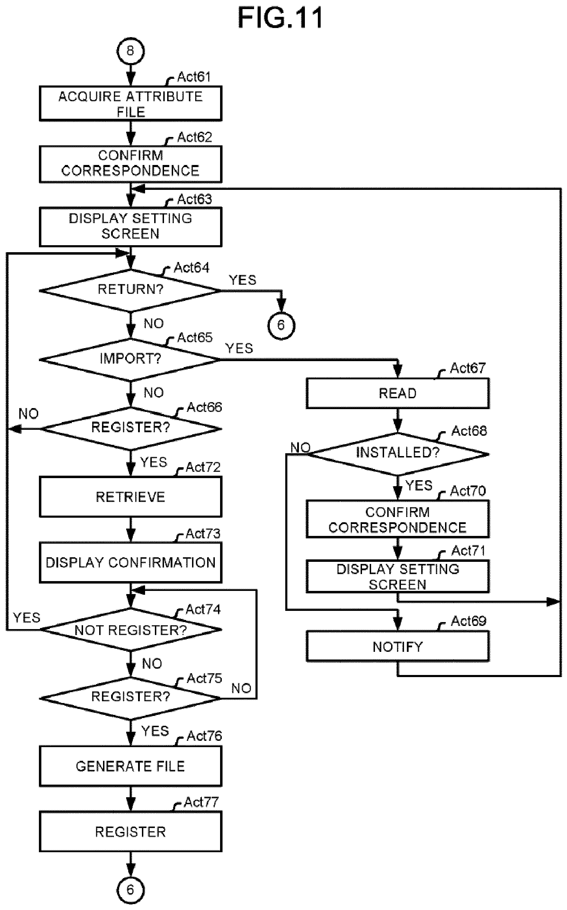

In Act 60, the processor 11 stands by until an application is selected in the application selection screen. If the application is selected, the processor 11 takes Yes in Act 60, and proceeds to the processing in Act 61 in Fig. 11.

In Act 61, the processor 11 refers to the application table T3 to specify the attribute file of the application selected in Act 60 (hereinafter referred to as "first target application"). Then, the processor 11 acquires the corresponding attribute file.

In Act 62, the processor 11 determines whether or not each setting item 52 included in the attribute file acquired in Act 61 is settable. Whether each setting item 52 is settable is determined based on, for example, a function of the image forming apparatus 10. The setting item 52 determined to be settable in Act 62 is hereinafter referred to as a "settable item". Then, the setting item 52 determined not to be settable in Act 62 is hereinafter referred to as a "non-settable item".

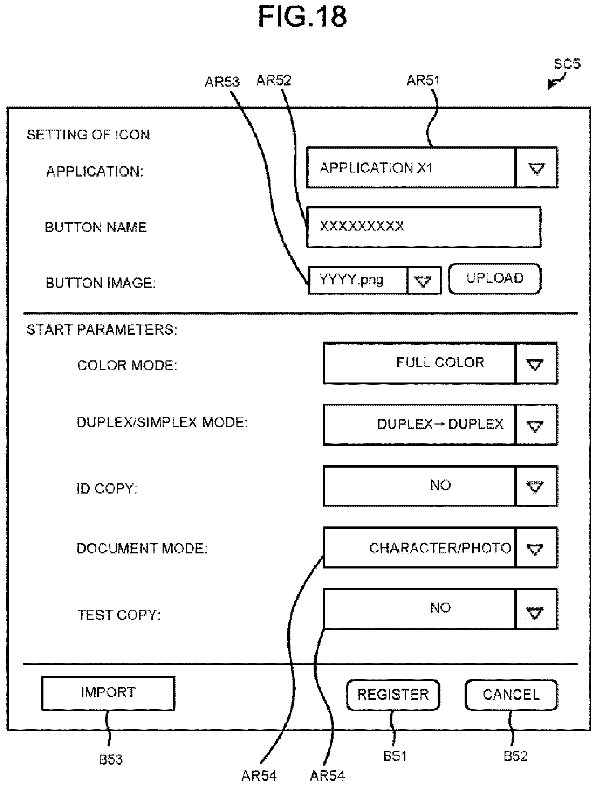

In Act 63, the processor 11 generates an image of a setting screen SC5 as shown in Fig. 18. Then, the processor 11 instructs the touch panel 161 to display the generated image. In response to the instruction, the touch panel 161 displays the setting screen SC5.

Fig. 18 is a diagram illustrating the setting screen SC5 displayed on the touch panel 161. The setting screen SC5 is used for editing various settings for icon buttons to be added to the icon table T2. The setting screen SC5 includes areas AR51 to AR54, a registration button B51, a cancel button B52 and an import button B53.

An application name of the first target application is displayed in the area AR51.

An area AR52 is a field for inputting an application button name. The input application button name is displayed in the area AR52.

An area AR53 is a field for inputting a button image file name. The input button image file name is displayed in the area AR53.

The setting screen SC5 includes the areas AR54 the number of which is the same as that of the settable items. Each area AR54 corresponds to each settable item. The area AR54 is a field for inputting setting contents of the corresponding settable item. The input setting contents are displayed in the area AR54.

The registration button B51 is operated by the operator at the time of registering an icon button corresponding to the setting contents displayed in the area AR51 to the area AR54 in the icon table T2.

The cancel button B52 is operated by the operator at the time of instructing the image forming apparatus 10 to terminate the display of the setting screen SC5 and return to the adding screen SC4.

The import button B53 is operated by the operator at the time of importing the export file and enabling the image forming apparatus 10 to read the setting contents.

In Act 64, the processor 11 determines whether or not the cancel button B52 is operated. If the cancel button B52 is not operated, the processor 11 takes No in Act 64, and proceeds to the processing in Act 65.

In Act 65, the processor 11 determines whether or not the import button B53 is operated. If the import button B53 is not operated, the processor 11 takes No in Act 65, and proceeds to the processing in Act 66.

In Act 66, the processor 11 determines whether or not the registration button B51 is operated. If the registration button B51 is not operated, the processor 11 takes No in Act 66, and returns to the processing in Act 64. Thus, the processor 11 repeats the processing in Act 64 to Act 66 until the cancel button B52, the import button B53 or the registration button B51 is operated.

If the cancel button B52 is operated in the standby state in Act 64 to Act 66, the processor 11 takes Yes in Act 64, and returns to the processing in Act 52 in Fig. 10.

If the import button B53 is operated in the standby state in Act 64 to Act 66 in Fig. 11, the processor 11 takes Yes in Act 65, and proceeds to the processing in Act 67.

In Act 67, the processor 11 reads the export file. Which one of export files is read is determined in response to an operation performed by the operator. The export file read here is, for example, stored in the storage medium such as the memory card or USB inserted into the interface of the image forming apparatus 10. Alternatively, the export file read here may be transmitted from the terminal device 20 and received by the communication interface 15. The export file may be generated by another image forming apparatus.

In Act 68, the processor 11 determines whether or not the application specified by the application ID included in the export file read in Act 67 (hereinafter referred to as "second target application") is installed in the image forming apparatus 10. If the second target application is not installed, the processor 11 takes No in Act 68, and proceeds to the processing in Act 69.

In Act 69, the processor 11 notifies that the application corresponding to the export file to be imported is not installed. For example, the processor 11 performs the notification by controlling the touch panel 161 to display the notification. The method of notification may be another method. After the processing in Act 69, the processor 11 returns to the processing in Act 63.

On the other hand, if the second target application is installed, the processor 11 takes Yes in Act 68, and proceeds to the processing in Act 70.

In Act 70, the processor 11 determines whether or not each setting item 52 included in the attribute file of the second target application is settable as in Act 62.

In Act 71, the processor 11 controls the touch panel 161 to display the setting screen SC5 as shown in Fig. 18, as in Act 62. However, settable items corresponding to the respective areas AR54 on the setting screen SC5 displayed here refer to setting items 52 determined to be settable in Act 70 instead of Act 62. The contents of the parameter file included in the export file are input to the respective areas AR54. In the area AR51, an application name of the second target application is displayed. After the processing in Act 71, the processor 11 returns to the processing in Act 63.

If the registration button B51 is operated in the standby state in Act 64 to Act 66, the processor 11 takes Yes in Act 66, and proceeds to the processing in Act 72.

In Act 72, the processor 11 determines whether or not an icon button having the same setting as the setting content input to each area AR54 is registered in the icon table T2. The processor 11 refers to the parameter file for the determination. The parameter file referred to by the processor 11 is a parameter file relating to a target application specified by the application name displayed in the area AR51. Here, the target application is a generic name of the first target application and the second target application. The processor 11 determines whether or not the setting in each of the parameter files associated with the application IDs of the target applications in the icon table T2 is the same as the setting content input to each area AR54. Then, If it is determined that the setting is not the same as the input setting content for all parameter files, the processor 11 determines that the icon button having the same setting as the setting content input to each area AR54 is not registered in the icon table T2. On the other hand, If it is determined that the setting is the same as the input setting content for any one of the parameter files, the processor 11 determines that the icon button having the same setting as the setting content input to each area AR54 is registered in the icon table T2.

In Act 73, the processor 11 generates an image of a confirmation screen. Then, the processor 11 instructs the operation panel 16 to display the generated image. In response to the instruction, the operation panel 16 displays the confirmation screen.

The confirmation screen is used for the operator to confirm whether to register the icon button corresponding to the content input in the setting screen SC5 in the icon table T2. The confirmation screen includes contents displayed in the area AR51 to the area AR54 in the setting screen SC5. The confirmation screen also shows a display for notifying that the icon button having the same setting is already registered if it is determined that in Act 72 that the icon button having the same setting as the setting content input to each area AR54 is registered in the icon table T2. The display is, for example, an image or a character string. The processor 11 may use a method other than the method of performing display on a display to perform notification. Furthermore, the confirmation button includes a registration confirmation button and a registration cancel button. The registration confirmation button is operated by the operator at the time of registering the icon buttons having the contents displayed in the area AR51 to the area AR54 in the setting screen SC5 in the icon table T2. The registration cancel button is operated by the operator at the time of canceling registration of the icon button in the icon table T2.

In Act 74, the processor 11 determines whether or not the registration cancel button is operated. If the registration cancel button is not operated, the processor 11 takes No in Act 74, and proceeds to the processing in Act 75.

In Act 75, the processor 11 determines whether or not the registration confirmation button is operated. If the registration confirmation button is not operated, the processor 11 takes No in Act 75, and returns to the processing in Act 74. Thus, the processor 11 repeats the processing in Act 74 and Act 75 until the registration cancel button or the registration confirmation button is operated.

If the registration cancel button is operated in the standby state in Act 74 and Act 75, the processor 11 takes Yes in Act 74, and returns to the processing in Act 64.

If the registration confirmation button is operated in the standby state in Act 74 and Act 75, the processor 11 takes Yes in Act 75, and proceeds to the processing in Act 76.

In Act 76, the processor 11 generates a parameter file including settable items and setting contents corresponding to the respective settable items. The setting content is the content input in each area AR54 in the setting screen SC5. The parameter file generated here is, for example, a text file in JSON format. For example, the contents of the parameter file are "{"ColorMode" : "Color", "DuplexMode" : "Duplex", "IsIDCopy " : "false", "CopyMode", "text/ photo", "ProofCopy" : "false"}". Here, the part enclosed by "" on the left side of ":" is the name of the settable item. The part enclosed by "" at the right side of ":" is a setting value indicating the setting content of the setting item. In the parameter file shown as an example, five setting items including ColorMode (color mode), DuplexMode (duplex/simplex mode), IsIDCopy (ID copy), CopyMode (document mode) and ProofCopy (test copy) and the setting values indicating the setting contents thereof are shown.

In Act 77, the processor 11 registers the icon button corresponding to the content input in the setting screen SC5 in the icon table T2. Specifically, the processor 11 adds a new record to the icon table T2. Then, the processor 11 generates a unique icon ID and writes the generated icon ID into the icon ID field of the new record. Furthermore, the processor 11 writes the character string displayed in the area AR51 into the application button name field of the new record, "application" into the button type field, "editable" into the editing execution field, the application ID of the target application into the application ID field, information for specifying the parameter file generated in Act 76 into the parameter file name field, and the content displayed in the area AR53 into the button image file name field, respectively. The information for specifying the parameter file generated in Act 76 is a file name or a file path of the parameter file.

After the processing in Act 77, the processor 11 returns to the processing in Act 52 in Fig. 10.

If it is determined that the application is to be executed when the processor 11 is in the standby state in Act 12 to Act 17 in Fig. 6, the processor 11 takes Yes in Act 16, and proceeds to the processing in Act 78. The processor 11 determines to execute the application, for example, in response to an operation on the icon button B11 of which the button type is the application. The icon button B11 operated here is hereinafter referred to as an "operation button".

In Act 78, the processor 11 acquires the parameter file specified by the parameter file name associated with the operation button.

In Act 79, the processor 11 executes the application specified by the application ID associated with the operation button. At this time, the processor 11 executes the application in the state in which the value included in the parameter file acquired in Act 78 is passed to the application as the start parameter. The value passed at this time is, for example, passed as a command line argument. In this way, the application to be executed realizes different operations depending on the passed value. After the processing in Act 79, for example, the processor 11 returns to the processing in Act 11 in response to the termination of the execution of the application.

If it is determined to uninstall the application in the standby state in Act 12 to Act 17, the processor 11 takes Yes in Act 17, and proceeds to the processing in Act 80.

In Act 80, the processor 11 uninstalls the application. The processor 11 determines the application to be uninstalled based on the operation content and the like. After the processing in Act 80, the processor 11 returns to the processing in Act 11.

The image forming apparatus 10 of the embodiment stores a plurality of parameter files in the auxiliary storage device 14 at time of installing the first type application. Each of the plurality of parameter files includes the start parameter to be passed to the application at the time of executing the application. The image forming apparatus 10 of the embodiment associates the parameter file with the icon button for starting the first type application. The image forming apparatus 10 passes the start parameter included in the parameter file to the first type application and executes such an application in response to the operation on the icon button. There are plural parameter files, and the parameters included therein are different. Therefore, the image forming apparatus 10 of the embodiment can start the same application with different start parameters according to the content of the parameter file associated with the icon button.

In Act 38, the image forming apparatus 10 of the embodiment determines whether or not there are icon buttons having the same designated combination of the user ID and the icon ID. The designated combination is, for example, a combination of the login ID and the icon ID associated with the second target button. If there are icon buttons having the same designated combination, the image forming apparatus 10 displays the first warning display. Thus, the image forming apparatus 10 can prevent the icon buttons with the same designated combination from being displayed on the home screen for the same user.

The image forming apparatus 10 of the embodiment does not add a record relating to the parameter file including setting values not supported by the image forming apparatus 10 to the icon table T2. Alternatively, the image forming apparatus 10 of the embodiment may delete the setting value not supported by the image forming apparatus 10 from the parameter file. In this manner, the image forming apparatus 10 of the embodiment does not associate the parameter file including the setting value not supported by the image forming apparatus 10 with the icon button. In this way, it can be prevented that the image forming apparatus 10 of the embodiment tries to execute the application with the infeasible start parameter.

The image forming apparatus 10 of the embodiment determines that the number of registered icon buttons exceeds the upper limit. In this way, the image forming apparatus 10 can prevent the number of icon buttons to be registered in the home screen from exceeding the upper limit number for registration.

The image forming apparatus 10 of the embodiment associates the icon IDs associated with a plurality of selected second selection buttons B31 with the home button IDs associated with the plurality of selected first selection buttons B21 in a one to one manner. Thereby, the image forming apparatus 10 of the embodiment can register a plurality of icon buttons in the home screen once.

The above embodiment can be modified as follows.

In the above embodiment, the home button ID specifies the position on the home screen displayed on the touch panel 161. In this way, the icon button is associated with the icon button B11 displayed on the touch panel 161 according to the home table T1. However, the icon button may be associated with a button provided in the input device 162 or the like. In this case, for example, the home button ID is assigned to each button. Then, the icon ID is associated with the button according to the home table T1. A physical button associated with the icon button is an example of an object.

In the above embodiment, the plurality of first selection buttons B21 can be set to the selected state. Here, the image forming apparatus 10 may limit the number of first selection buttons B21 that can be set to the selected state. For example, in the image forming apparatus 10, the number of first selection buttons B21 that can be set to the selected state may be one. The number of first selection buttons B21 that can be set to the selected state is, for example, predetermined by a designer, an administrator or an operator of the image forming apparatus 10.

In the above embodiment, in a case in which the icon button corresponding to the second target button is registered in the home screen for the user during login, the image forming apparatus 10 notifies the registration of the icon button. Then, the image forming apparatus 10 determines whether to set the second target button to the selected state based on the operation of the operator. However, in a case in which the icon button corresponding to the second target button is registered in the home screen for the user during login, the image forming apparatus 10 may not be able to set the second target button to the selected state. In this case, for example, the processor 11 of the image forming apparatus 10 returns to the processing in Act 33 in Fig. 7 after the processing in Act 39 in Fig. 8. A warning window includes a character string or an image indicating that the icon button corresponding to the second target button is registered in the home screen for the user during login, instead of the first warning display, the No button and the Yes button.

Through the operations as described above, the image forming apparatus 10 can prevent the same icon button from being registered in the home screen for the same user.

In the above embodiment, the home screen SC1, the selection screen SC2, the button screen SC3, the adding screen SC4 and the setting screen SC5 are displayed on the touch panel 161. However, the display device 26 of the terminal device 20 may display the same screen as at least one of the home screen SC1, the selection screen SC2, the button screen SC3, the adding screen SC4 and the setting screen SC5. In this case, the image forming apparatus 10 controls the terminal device 20 to display each screen by transmitting information necessary to display the screen to the terminal device 20, for example. Then, the terminal device 20 transmits information relating to an operation performed on each screen using the input device 27 to the image forming apparatus 10. The image forming apparatus 10 performs the same operation as the above embodiment based on the information relating to the operation. As described above, the image forming apparatus 10 can be operated by accessing the terminal device 20.

The processor 11 and the processor 21 may realize a part or all of the processing realized by the programs in the above embodiment by a hardware configuration of a circuit.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

## Claims

1. An image forming apparatus, comprising:
an interface configured to receive an operation input on an object of the interface; and
a processing section configured to:
install an application;
install a plurality of parameter sets each including one or more start parameters for the application;
associate one parameter set selected from the plurality of parameter sets and the application with the object; and
execute the application associated with the object using the start parameter included in the parameter set associated with the object, in response to the operation input on the object, wherein the plurality of parameter sets includes different start parameters.

2. The image forming apparatus according to claim 1, wherein the processing section does not associate a parameter set including a start parameter not supported by the image forming apparatus with the object.

3. The image forming apparatus according to claim 1 or 2, wherein the processing section rewrites a start parameter not supported by the image forming apparatus with another predetermined start parameter when the start parameter not supported by the image forming apparatus is included in a parameter set.

4. The image forming apparatus according to any one of claims 1 to 3, wherein the processing section determines that there is an object associated with a parameter set and an application which are the same as the parameter set and the application to be associated with an object.

5. The image forming apparatus according to any one of claims 1 to 4, wherein the object includes an icon button displayed on the interface.

6. The image forming apparatus according to any one of claims 1 to 5, wherein the different start parameters include parameters related to color, size, modes of operations, and action instructions.

7. The image forming apparatus according to any one of claims 1 to 6, wherein the processing section is further configured to import an export file and install a second target application.

8. A computer-implemented data structure used in an image forming apparatus, the data structure comprising:
data for installing an application in the image forming apparatus; and
a plurality of parameter sets each including one or more start parameters for the application configured to be executed in the image forming apparatus, wherein:
the plurality of parameter sets includes different start parameters, respectively, and
the data structure is operable to install the application and the plurality of parameter sets in the image forming apparatus in such a manner that the application is executable using a start parameter included in one parameter set selected from the plurality of parameter sets.

9. The data structure according to claim 8, wherein the data for installing an application in the image forming apparatus comprises two or more different applications to be installed in the image forming apparatus.

10. The data structure according to claim 9, wherein the two or more different applications include the plurality of parameter sets and have different start parameters therein.

11. The data structure according to claim 10, wherein the different start parameters include parameters associated with color, duplex or simplex mode, specific size, document mode, or test copy.

12. The data structure according to any one of claims 8 to 11, wherein the application installed from the data in the image forming device is replaceable with another application in the data by operations of uninstallation and installation.

13. The data structure according to any one of claims 8 to 12, wherein the data for installing an application in the image forming apparatus is modifiable by adding or importing a new application, exporting a newly configured application, or removing an existing application.

14. A method for applying a set of start parameters in an image forming device, the method comprising:
providing two or more objects on an interface, the two or more objects associated with respective applications having respective set of parameters;
receiving a selection of one of the two or more objects on the interface;
installing an application corresponding to the selection of the one of the two or more objects, the application including a set of start parameters for controlling operation of the image forming device;
using the set of start parameters in the image forming device; and
executing, by a processor in the image forming device, an operation according to the set of start parameters.

15. A computer program comprising instructions which, when the program is executed by a computer, cause the computer to carry out the steps of the method according to claim 14.
